# FASCICULE DE BREVET EUROPEEN

(11) **EP 4 521 680 B1**
(45) Date de publication et mention de la délivrance du brevet: **04.02.2026**
(21) Numéro de dépôt: 24199237.9
(22) Date de dépôt: 09.09.2024
(51) Int. Cl.: H04L 9/08

(54) **PROCÉDÉ ET DISPOSITIF DE PARTAGE DE CLÉS SECRÈTES DANS UN RÉSEAU COMPRENANT UN SATELLITE**
VERFAHREN UND VORRICHTUNG ZUR GEMEINSAMEN NUTZUNG GEHEIMER SCHLÜSSEL IN EINEM SATELLITENNETZWERK
METHOD AND DEVICE FOR SHARING SECRET KEYS IN A NETWORK COMPRISING A SATELLITE

(30) Priorité: 07.09.2023 FR 2309413
(43) Date de publication de la demande: 12.03.2025
(73) Titulaire: THALES, 92190 Meudon (FR)
(72) Inventeur: VAN DEN BOSSCHE, Mathias, 31120 GOYRANS (FR)
(74) Mandataire: Atout PI Laplace

(56) Documents cités:
- US-A1- 2022 393 866
- "Quantum Safe Cryptography and Security; An introduction, benefits, enablers and challenges", QUANTUM SAFE CRYPTOGRAPHY V1.0.0, 6 October 2014 (2014-10-06), pages 1 - 49, XP055146959, ISBN: 979-1-09-262003-0, Retrieved from the Internet <URL:http://docbox.etsi.org/Workshop/2014/201410_CRYPTO/Quantum_Safe_Whitepaper_1_0_0.pdf> [retrieved on 20141015]
- MARAL G ET AL: "SATELLITE COMMUNICATIONS SYSTEMS. SYSTEMS, TECHNIQUES AND TECHNOLOGY", 1 January 1993, SATELLITE COMMUNICATIONS SYSTEMS. SYSTEMS, TECHNIQUES AND TECHNOLOGY; [WILEY SERIES IN COMMUNICATION AND DISTRIBUTED SYSTEMS], CHICHESTER, JOHN WILEY & SONS, GB, PAGE(S) 197 - 208, ISBN: 978-0-471-93032-7, XP002072563

## Description

### Domaine technique :

La présente invention concerne le domaine de la sécurité des technologies de l'information et plus particulièrement le domaine du partage de clés de chiffrement par satellite via des canaux quantiques.

### Technique antérieure :

Depuis toujours, il existe la nécessité d'échanger, par un canal de communication public, des informations sensibles qui doivent rester secrètes. Supposons que deux personnes, Alice et Bob, souhaitent échanger, au travers d'un canal de communication public authentifié (par exemple internet), des informations sensibles à l'abri des regards indiscrets. Pour cela ils doivent chiffrer leurs messages. Appelons Eve, la personne qui souhaite intercepter ces messages. Alice doit, à l'aide d'une fonction cryptographique publiée (c'est à dire non secrète) et d'une clé secrète, chiffrer ses messages avant de les envoyer à Bob au travers d'un canal public. Lorsque Bob reçoit les messages chiffrés, il doit, à l'aide de la même fonction cryptographique et de la même clé secrète qu'Alice, les déchiffrer pour pouvoir accéder aux informations en clair.

Se pose maintenant le problème de la clé secrète partagée entre Alice et Bob : comment est-elle générée, comment est-elle échangée de façon sécurisée et à l'abri des regards indiscrets ?

Lors des échanges sécurisés sur internet, l'établissement d'une clé secrète partagée est effectué à l'aide de techniques reposant sur la cryptographie à clé publique que nous ne détaillons pas ici. Une nouvelle solution a été imaginée à la fin du XXème siècle. Elle propose d'utiliser un canal quantique qui permet à Alice et à Bob d'établir une clé secrète commune en échangeant des particules quantiques (ex : des photons) sans qu'Eve ne puisse remonter à la clé en interceptant ces particules. Néanmoins, cette technique de partage de clés par des canaux quantiques (QKD en anglais pour Quantum Key Distribution) souffre de quelques limitations qui rendent difficile son application à un grand nombre d'utilisateurs et sur de très longues distances. Ce qui pourrait, à terme, rendre cette technique peu attractive et donc pas assez rentable pour générer des opportunités industrielles.

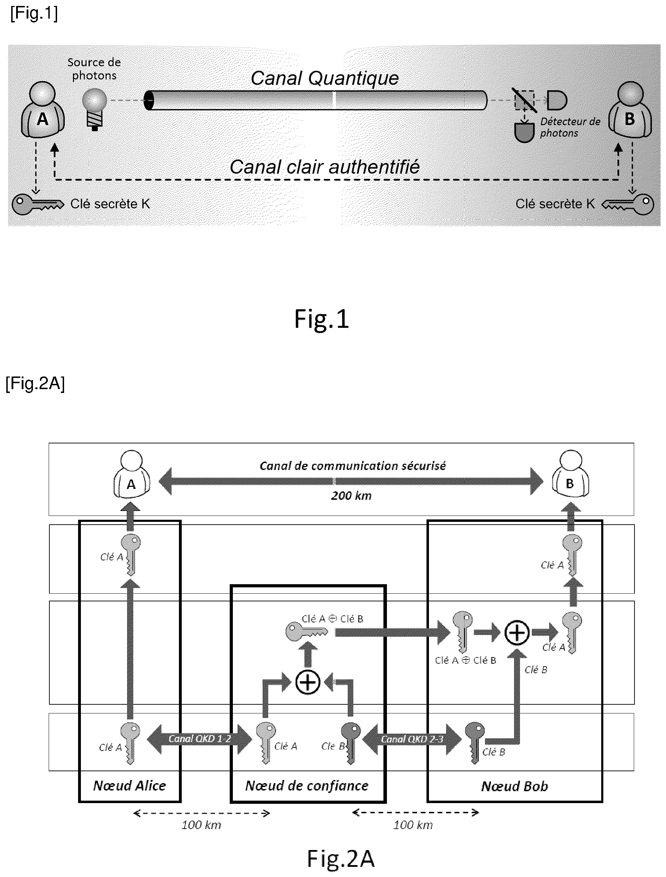

La figure 1 représente schématiquement l'architecture d'un canal quantique qui permet, à deux utilisateurs Alice (l'émetteur des particules) et Bob (le récepteur des particules), d'établir une clé secrète commune. La clé est une séquence de bits, aléatoires, pouvant donc prendre comme valeur 0 ou 1. Par exemple, dans le cadre du protocole BB84, Alice propose des bits de clé en utilisant deux modes de polarisation de photons préparé par Alice, le choix du mode de polarisation est aléatoire. Alice note pour chaque bit (donc chaque photon) le mode de polarisation aléatoirement choisi. A l'aide d'un filtre polarisant et d'un détecteur de photons pouvant être orienté alternativement selon les deux modes de polarisation choisis aléatoirement, Bob note le résultat de détection (le photon est sorti du filtre par la voie 'parallèle' ou par la voie 'perpendiculaire' à son axe.), ainsi que l'orientation choisie du filtre.

Dans BB84, une fois toute la séquence transmise, Alice envoie à Bob les modes de polarisation employés pour chaque détection par un canal clair authentifié. Bob peut alors déduire la valeur des bits pour lesquels l'orientation de polarisation a été la même. Il connaît alors avec certitude N/2 bits en moyenne pour N bits transmis par Alice, cette séquence étant appelée clé réconciliée. Cette étape peut s'accompagner de procédés de correction d'erreur en utilisant des valeurs de contrôle et des algorithmes de type LDPC ou cascade, qui utilisent des paramètres de contrôle echangés sur le canal authentifié.

Enfin, Alice et Bob se mettent d'accord sur un sous-ensemble de bits de la clé réconciliée. Ils comparent alors s'ils ont obtenu les mêmes bits dans ce sous-ensemble. Chaque différence est attribuée par défaut à un espion (même si des erreurs de mesure peuvent les avoir aussi causées). En effet, le théorème de non clonage garantit qu'en cas d'écoute, Eve force le photon sur un mode de polarisation (qui n'est pas forcément celui d'Alice). Alors, si Eve devine correctement le mode d'Alice avec une probabilité de 50 %, alors 25 % des bits de la clé de réconciliation seront en désaccord entre Alice et Bob. A ce stade, une preuve mathématique de sécurité permet à partir du nombre de bits différents d'évaluer la quantité d'information ainsi potentiellement compromise, et de définir une fonction à sens unique (Hash function) qui, appliquée à la clé réconciliée produit une clé plus petite, mais ne contenant plus aucune information compromise. C'est l'étape d'amplification de la confidentialité, qui donne une clé sûre.

Au niveau des réseaux sols, l'échange de clé (ou plus précisément : l'établissement de clé) par un canal quantique se fait simplement, via un canal de communication optique porté par de la fibre optique. Néanmoins, l'échange de photons polarisés uniques (ou d'impulsions lumineuses de très faible intensité) au travers d'une fibre ne permet pas, à Alice et à Bob, d'échanger ces photons au-delà de quelques dizaines de km qui représentent l'asymptote combinée de probabilité d'absorption à 100% des photons par le matériau qui compose la fibre optique et du raccourcissement de la clé par l'amplification de confidentialité.

En conséquence, l'architecture des réseaux de canaux quantiques est fortement impactée par cette contrainte physique. Deux solutions ont été imaginées pour palier à cette limitation de distance dans la fibre optique.

La première solution envisagée est de propager les clés par des nœuds dits "de confiance" (ou "trusted nodes") placés à intervalles réguliers (tous les 50 kilomètres par exemple). La figure 2A illustre schématiquement un dispositif de génération de clé par nœud de confiance connu de l'art antérieur. Le nœud de confiance manipule en clair la clé établie avec Alice (Clé A) et la clé établie avec Bob (Clé B). Ce nœud de confiance est positionné approximativement à équidistance entre Alice et Bob et permet doubler la portée d'établissement de clé par canaux quantiques. Ensuite, le nœud de confiance s'appuie sur la technique du masque jetable pour transmettre cette clé A à Bob. Pour cela, le nœud de confiance effectue un « XOR » (porte logique OU exclusif bit à bit) entre la clé d'Alice et la clé de Bob. Par « XOR », on entend ici et dans la suite du document le fait de combiner deux clés par l'opérateur logique « ou exclusif » ou « XOR », de symbole ⊕. Le résultat est transmis à Bob par un canal clair authentifié. Bob, qui détient la clé B, pourra de nouveau effectuer un XOR entre la séquence reçue du nœud n°2 et sa clé (Clé B) pour recouvrer la clé d'Alice (Clé A).

Cette première solution repose sur la propriété de la fonction XOR : A ⊕ B ⊕ B = A ⊕ (B ⊕ B)₌₀ = A mais aussi sur la technique de chiffrement par masque jetable (OTP en anglais pour One Time Pad cryptography) qui garantit qu'il n'est pas possible de remonter à la clé A et/ou à la clé B par la seule connaissance de la séquence Clé A ⊕ Clé B. On appelle A ⊕ B, « clé chiffrée ». La technique du masque jetable repose sur le principe suivant. Tout message qui doit être chiffré le sera par une clé strictement aléatoire, de la taille du message et qui sera combinée au message clair pour aboutir au message chiffré. Le déchiffrement sera effectué en effectuant l'opération inverse sur le message chiffré en utilisant la même clé secrète. Cette technique a été démontré théoriquement sûre par Claude Shannon, et ce, quels que soient les moyens dont dispose l'attaquant à condition de respecter 3 règles absolument fondamentales :
A. La clé doit être aussi longue que le message à chiffrer,
B. La clé doit être strictement aléatoire, les éléments qui constituent la clé (bits ou caractères) de la clé doivent tous être indépendant les uns des autres.
C. Chacune des clés (ou masque) ne doit être utilisée qu'une seule fois pour chiffrer un seul message.

Néanmoins, cette première solution requiert que les nœuds de confiance, qui manipulent les clés en clair, soient sécurisés avec un très fort niveau de sécurité qui implique des surcoûts et des contraintes opérationnelles non négligeables. Ensuite, ce type de solution est difficile, voire impossible, à mettre en place pour interconnecter deux utilisateurs séparés par un océan (difficile et couteux d'implémenter des nœuds de confiance tous les 100km dans l'océan).

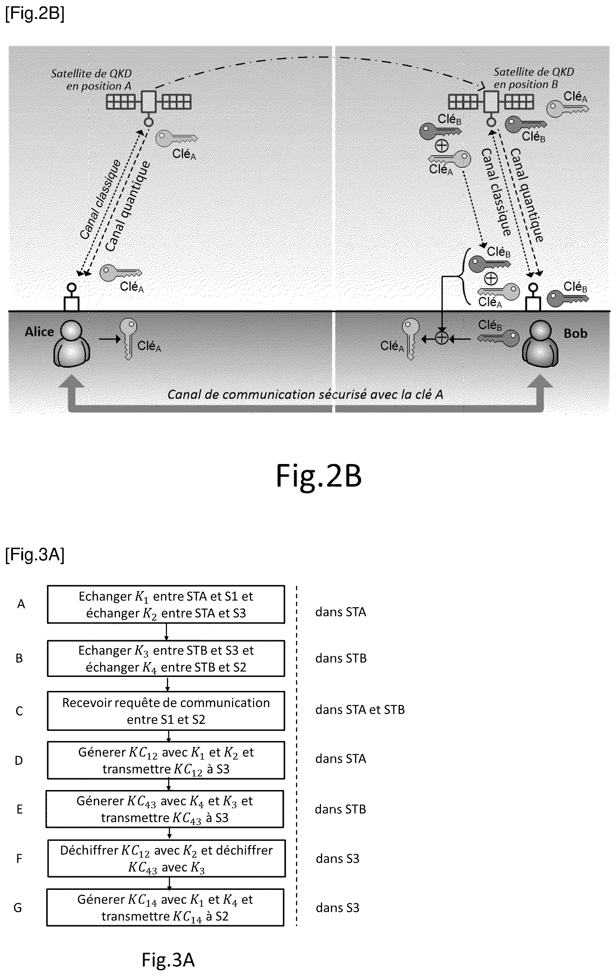

La deuxième solution est de procéder à des échanges de photons en espace libre, et depuis l'espace pour atteindre de longues distances. Dans ce cas, la limite des 100 kilomètres de la fibre optique n'est plus applicable et il est possible de distribuer à deux utilisateurs localisés n'importe où sur terre des clés de chiffrement par l'intermédiaire de canaux QKD depuis l'espace. Cette configuration est illustrée dans la figure 2B. Dans ce cas, c'est le satellite qui fait office de nœud de confiance puisqu'il va établir une clé A avec Alice (par exemple une station terrestre) et une clé B avec Bob (par exemple une autre station terrestre) pour ensuite transmettre à Bob la clé A ⊕ clé B (clé de chiffrage) sur un canal de communication classique clair et authentifié pendant le survol de la station de Bob. Au sol, Bob, détenteur de la clé B, sera capable d'extraire la clé A d'Alice en effectuant un XOR de la clé B avec la clé de chiffrage de séquence Clé A ⊕ Clé B que le satellite lui aura redescendu. Ici, le satellite, s'il est en orbite basse se déplace relativement à Alice et relativement à Bob. Donc, quelle que soit la distance qui sépare Alice et Bob, le satellite agit comme un nœud de confiance mobile capable d'établir la Clé A et la Clé B et de distribuer la combinaison Clé A ⊕ Clé B qui permettent à Alice et à Bob de partager une clé secrète commune (Clé A).

Dans cette deuxième solution, l'aspect 'gestion de paires' de stations terrestres et l'aspect 'survol de stations appariées' est susceptible de contraindre fortement la planification des contacts optiques quantiques entre station et satellite dans le moyen généralement considéré. En effet, les trajectoires des satellites sont extrêmement rigides, et les périodes de contact optique entre satellites et stations terrestres, si elles sont prédictibles, ne sont pas flexibles. De plus, la couverture nuageuse est susceptible d'interrompre le canal quantique reliant le satellite et une station terrestre et ainsi d'empêcher l'établissement d'un lien élémentaire satellite-station. Dans ce cas, la planification des échanges doit donc pouvoir être remise à jour.

Ces contraintes rendent très complexe et peu efficace la planification des contacts entre stations et satellites. En effet, la solution de la figure 2B requiert une séquence précise des différents contacts, due au fait qu'elle ne gère pas des connexions point à point, mais en fait des paires de connections pour partager des clés entre paires de stations sol. Si la séquence est interrompue par une perturbation météorologique mal anticipée, la disponibilité du service peut être mise en danger car la visibilité de la station que l'on souhaitait connecter peut ne se reproduire que plusieurs jours plus tard. En conséquence, les stratégies d'optimisation des contacts entre satellites et stations sont extrêmement complexes et requièrent la résolution de problèmes dont le l'optimum est difficile à déterminer. La demande de brevets US 2022/393866 divulgue une telle méthode de planification de sessions d'échange de clés dans un système comprenant une constellation de satellites et une pluralité de stations au sol.

L'invention vise à pallier certains des problèmes précités de l'art antérieur. A cet effet, un objet de l'invention est un procédé et un dispositif de partage de clés secrètes sûres destinées sécuriser des communications entre une première station de communication et une deuxième station de communication. L'invention est mise en œuvre dans un réseau comprenant au moins deux satellites qui survolent une station commune de manière à être en visibilité optique de cette dernière. Dans le procédé et la méthode de l'invention, la clé secrète sûre est distribuée dans une étape séparée temporellement de l'étape où ces clés sont générées par QKD, par l'intermédiaire de la station commune. Aussi, la distribution de la clé sure à la première et à la deuxième station via la station commune est effectuée par des canaux qui ne requierent pas nécessairement la visibilité optique entre les satellites et la station commune et peut se faire bien plus tard en fonction des besoins des utilisateurs. La solution de l'invention permet de ne pas avoir à mettre en œuvre des trajectoires des deux satellites qui survolent successivement la première et la deuxième stations que l'on souhaite connecter : le travail peut être partagé entre plusieurs satellites par paquets de stations et non par paquets de paires de stations comme cela est habituellement envisagé dans l'art antérieur.

### Résumé de l'invention :

A cet effet, un objet de l'invention est une méthode de partage de clé secrète sûre destinée à sécuriser des communications entre une première station de communication et une deuxième station de communication, ladite méthode comprenant les étapes suivantes :
A. échanger, via un canal quantique reliant un premier satellite à la première station de communication, une première clé secrète et échanger, via un canal quantique reliant le premier satellite à une troisième station de communication dit station commune, une deuxième clé secrète
B. échanger, via un canal quantique reliant un deuxième satellite à la station commune, une troisième clé secrète et échanger, via un canal quantique reliant le deuxième satellite à la deuxième station de communication, une quatrième clé secrète
C. recevoir, dans le premier et le deuxième satellites, une requête de communication entre la première et la deuxième station de communication,
D. chiffrer, dans le premier satellite, la première clé secrète par une méthode de chiffrement symétrique qui utilise la deuxième clé secrète, de manière à générer un premier message crypté et transmettre le premier message crypté à la station commune (par un premier canal authentifié
E. chiffrer, dans le deuxième satellite, la quatrième clé secrète par une méthode de chiffrement symétrique qui utilise la troisième clé secrète, de manière à générer un deuxième message crypté et transmettre le deuxième message crypté à la station commune par un deuxième canal authentifié
F. dans la station commune, déchiffrer, le premier message crypté à l'aide de la deuxième clé secrète, de manière à obtenir la première clé secrète, et déchiffrer le deuxième message crypté à l'aide de la troisième clé secrète, de manière à obtenir la quatrième clé secrète
G. chiffrer, dans la station commune, la première clé secrète par une méthode de chiffrement symétrique qui utilise la quatrième clé secrète, de manière à générer un troisième message crypté et transmettre le troisième message crypté à la deuxième station de communication par un troisième canal authentifié.

Selon un mode de réalisation, la méthode de l'invention comprend une étape ultérieure H consistant à déchiffrer, dans la deuxième station de communication, le troisième message crypté à l'aide de la quatrième clé secrète de manière à obtenir la première clé secrète, la première clé secrète formant la clé secrète sûre.

De manière préférentielle, la méthode de chiffrement symétrique est la méthode du masque jetable et dans laquelle les clés secrètes et les messages cryptés sont codées en binaire, les étapes de chiffrement étant chacune effectuée par la porte logique XOR combinant les clés secrètes respectivement impliquées dans ladite étape de chiffrement, les étapes de déchiffrement étant chacune effectuée par la porte logique XOR combinant le message crypté avec la clé secrète chiffrée qui sont respectivement impliqués dans ladite étape de déchiffrement.

Selon un mode de réalisation, la méthode de l'invention comprend deux étapes ultérieures I et J qui consistent à :
I. chiffrer, dans la première station de communication, un message non aléatoire à l'aide de la première clé sécrète puis à transmettre le message non aléatoire chiffrée à la deuxième station de communication, par un canal dit clair
J. déchiffrer, dans la deuxième station de communication, ledit message non aléatoire chiffré à l'aide de la première clé sécrète.

Selon un mode de réalisation, les étapes A à H sont répétées une pluralité de fois afin de former une pluralité de clés secrètes sûres.

Selon un mode de réalisation, dans l'étape A, l'échange de la deuxième clé sécrète requiert une sous étape de réconciliation effectuée via ledit premier canal authentifié et/ou, dans l'étape B, l'échange de la troisième clé sécrète requiert une sous étape de réconciliation effectuée via ledit deuxième canal authentifié.

Selon un mode de réalisation, les étapes A à H sont répétées une pluralité de fois avec une paire de stations de communication différente de la première et la deuxième station de communication.

Un autre objet de l'invention est un système de communication comprenant une première et une deuxième stations de communication, une troisième station de communication dite station commune et un premier et un deuxième satellites, ledit premier satellite étant adapté pour échanger, via un canal quantique reliant le premier satellite à la première station de communication, une première clé secrète et pour échanger, via un canal quantique reliant le premier satellite à la station commune, une deuxième clé secrète, ledit deuxième satellite étant adapté pour échanger, via un canal quantique reliant le deuxième satellite à la station commune, une troisième clé secrète et pour échanger, via un canal quantique reliant le deuxième satellite à la deuxième station de communication, une quatrième clé secrète, le premier satellite étant en outre adapté pour recevoir une requête de communication entre la première et la deuxième station de communication transmise via un canal clair de requête, et après quoi chiffrer la première clé secrète par une méthode de chiffrement symétrique qui utilise la deuxième clé secrète de manière à générer un premier message crypté et transmettre le premier message crypté à la station commune par un premier canal authentifié. le deuxième satellite étant en outre adapté pour recevoir ladite requête de communication, et après quoi chiffrer la quatrième clé secrète par une méthode de chiffrement symétrique qui utilise la troisième clé secrète de manière à générer un deuxième message crypté et transmettre le deuxième message crypté à la station commune par un deuxième canal authentifié, la station commune étant adaptée pour :
- déchiffrer le premier message crypté à l'aide de la deuxième clé secrète de manière à obtenir la première clé secrète et déchiffrer, dans la station commune, le deuxième message crypté à l'aide de la troisième clé secrète de manière à obtenir la quatrième clé secrète
- chiffrer la première clé secrète par une méthode de chiffrement symétrique qui utilise la quatrième clé secrète de manière à générer un troisième message crypté et transmettre le troisième message crypté à la deuxième station de communication par un troisième canal authentifié.

Selon un mode de réalisation, la deuxième station de communication est adaptée pour déchiffrer le troisième message crypté à l'aide de la quatrième clé secrète de manière à obtenir la première clé secrète la première clé secrète formant la clé secrète sûre.

Selon un mode de réalisation, le premier canal authentifié et/ou le deuxième canal authentifié sont chacun une liaison bidirectionnelle de télémesure/télécommande du premier satellite et du deuxième satellite respectivement.

Selon un mode de réalisation, le premier canal authentifié est relayé par un satellite additionnel via une liaison inter-satellite optique ou RF reliant le satellite additionnel et le premier satellite et/ou le deuxième canal authentifié est relayé par un satellite additionnel via une liaison inter-satellite optique ou RF reliant le satellite additionnel et le deuxième satellite.

Selon un mode de réalisation, le premier canal authentifié et le deuxième canal authentifié sont chacun un lien d'ancrage RF ou optique d'un service de télécommunication porté par le premier satellite et le deuxième satellite respectivement.

Selon un mode de réalisation, la station le premier canal authentifié est différent du canal quantique reliant le premier satellite à ladite station de commune (S3) et le deuxième canal authentifié est différent du canal quantique reliant le deuxième satellite à ladite station de commune.

Selon un mode de réalisation, le canal clair de requête est relayé par une station locale apte à communiquer avec le premier et le deuxième satellite via une liaison locale authentifié.

Un autre objet de l'invention est une station de communication dite station commune, ladite station étant adaptée pour :
- recevoir une deuxième clé secrète échangée via un canal quantique reliant un premier satellite et la station commune
- recevoir une troisième clé secrète échangée via un canal quantique reliant un deuxième satellite à la station commune
- recevoir, par un premier canal authentifié, un premier message crypté transmis par le premier satellite et généré par une méthode de chiffrement symétrique qui chiffre, avec la deuxième clé secrète, une première clé secrète échangée via un canal quantique reliant le premier satellite à une première station de communication, et
- recevoir, par un deuxième canal authentifié, un deuxième message crypté transmis par le deuxième satellite et généré par une méthode de chiffrement symétrique qui chiffre, avec la troisième clé secrète, une quatrième clé secrète échangée via un canal quantique reliant le deuxième satellite à une deuxième station de communication,
- déchiffrer le premier message crypté à l'aide de la deuxième clé secrète, de manière à obtenir la première clé secrète, et déchiffrer le deuxième message crypté à l'aide de la troisième clé secrète, de manière à obtenir la quatrième clé secrète.

### Brève description des figures :

D'autres caractéristiques, détails et avantages de l'invention ressortiront à la lecture de la description faite en référence aux dessins annexés donnés à titre d'exemple et qui représentent, respectivement :
[Fig.1] une vue schématique d'un dispositif de QKD selon l'art antérieur,
[Fig.2A], une vue schématique d'un dispositif de génération de clé par QKD par satellite de l'art antérieur,
[Fig.2B], une vue schématique d'un dispositif de génération de clé par nœud de confiance de l'art antérieur,
[Fig.3A], une vue schématique d'une méthode de distribution de clé secrètes sûre selon l'invention,
[Fig.3B], une vue schématique d'un système de distribution de clé secrète selon l'invention,
[Fig.3C], une vue schématique d'un système de distribution de clé secrète selon un mode de réalisation de l'invention,
[Fig.3D], une vue schématique d'un système de distribution de clé secrète selon un mode de réalisation de l'invention,
[Fig.4], une vue schématique d'une méthode de génération d'une clé secrète sûre selon un mode de réalisation préféré de la méthode de l'invention
[Fig.5A], une vue schématique d'une méthode de génération d'une clé secrète sûre selon un mode de réalisation de la méthode de l'invention
[Fig.5B], une vue schématique d'un système de distribution de clé secrète selon un mode de réalisation de l'invention,

Dans les figures, sauf contre-indication, les éléments ne sont pas à l'échelle.

### Description détaillée :

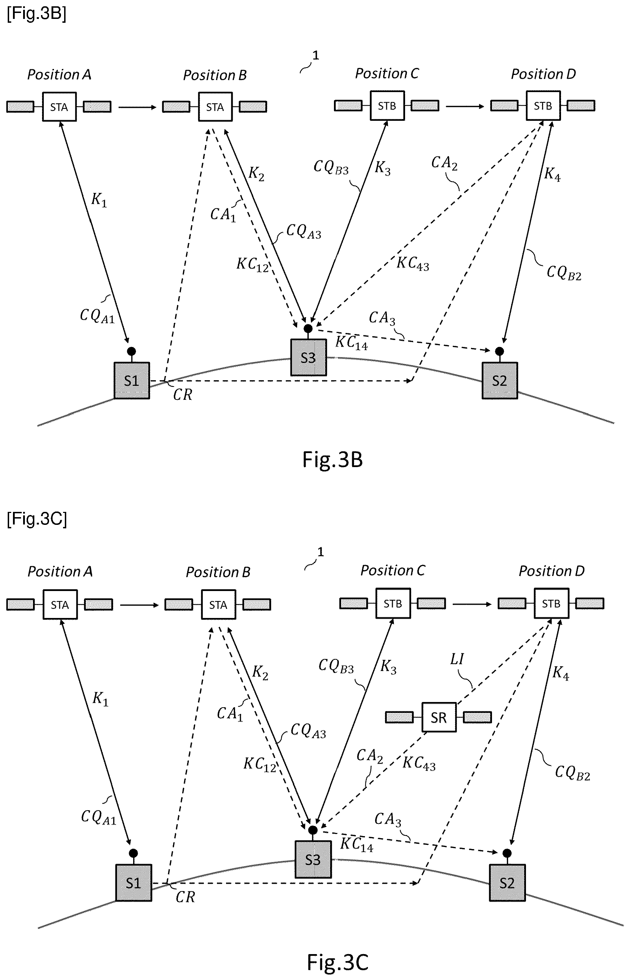

La figure 3A illustre schématiquement une méthode selon l'invention de distribution de clé secrète sûre destinée à sécuriser des communications entre une première station de communication S1 et une deuxième station de communication S2. La figure 3B illustre schématiquement un système de communication 1 selon l'invention adapté pour mettre en œuvre la méthode de la figure 3A. En plus de la première et de la deuxième stations S1, S2, le système 1 comprend une troisième station de communication S3 dite station commune et un premier et un deuxième satellites STA, STB.

Dans une première étape A de la méthode de l'invention le premier satellite STA échange une première clé secrète *K*₁ via un canal quantique CQ_{A1} reliant le premier satellite STA à la première station de communication S1. Cet échange dans l'étape A est réalisée lorsque le satellite STA est dans une position A, pendant le survol de la station S1 et nécessite que le satellite STA soit en visibilité optique de la station S1 afin de transmettre et de détecter des qbits.

De plus, lorsque le satellite STA est dans une position B dans laquelle il est en visibilité optique de la station commune S3, le satellite échange une deuxième clé secrète *K*₂ via un canal quantique CQ_{A3} reliant le premier satellite STA à la station commune S3.

Pour clarification, dans l'invention, lorsqu'on décrit une étape d'échange de clé par canal quantique reliant une station et un satellite, l'émission des qbits peut se faire du satellite vers la station ou inversement.

Dans une étape B, le deuxième satellite STB échange une troisième clé secrète *K*₃ via un canal quantique CQ_{B3} reliant un deuxième satellite STB à la station commune S3. Cet échange est réalisé lorsque le satellite STB est dans une position C, pendant le survol de la station commune S3 par le satellite STB et nécessite qu'il soit en visibilité optique de la station S3. De plus, lorsque le satellite STB est dans une position D dans laquelle il est en visibilité optique de la station S2, le satellite STB échange une quatrième clé secrète *K*₄ via un canal quantique CQ_{B2} reliant le deuxième satellite STB à la deuxième station de communication S2.

Le but de la méthode de l'invention est de faire parvenir la première clé *K*₁ à la deuxième station S2 de manière parfaitement sûre pour que les stations S1 et S2 puissent communiquer de manière sécurisée avec cette clé *K*₁, sans qu'il ne soit nécessaire que le satellite STA survole la station S2 et tout en assouplissant considérablement la planification des opérations respectives des satellites STA et STB.

Dans l'invention, les étapes d'échanges de clés secrètes par canal quantique peuvent être réalisées par tout protocole QKD connu de l'homme de l'art. On rappelle qu'une couverture nuageuse au-dessus d'une station de communication terrestre bloque toute liaison optique en espace libre dans le visible et le proche infra-rouge. De plus, le soleil génère de grandes quantités de photons parasites par diffraction dans l'atmosphère (irradiance indirecte) qui dégradent fortement la détection des qbits pouvant mener à la rupture de la liaison. Ainsi, l'état actuel de l'art de la QKD par satellite permet la transmission de qbit par la liaison optique en proche infra-rouge à travers l'atmosphère en ciel clair. Ainsi la disponibilité du canal quantique entre un satellite et une station de communication terrestre est dépendante des événements et aléas météorologiques au-dessus de la station.

Il est entendu que, dans la méthode de l'invention, l'ordre relatif du déroulement des étapes A et B est sans importance. Aussi, les deux étapes A et B peuvent être mises en œuvre simultanément ou l'une après l'autre (soit étape A puis étape B ou B puis A).

Après les étapes A et B, la méthode de l'invention comprend une étape C consistant à recevoir dans les satellites STA et STB une requête de communication entre la station S1 et la station S2 émise par une station dite émettrice et transmise via un canal de requête CR. Selon le mode de réalisation illustré dans la figure 3B la requête est émise par la station S1 qui forme donc la station émettrice. Alternativement, selon un autre mode de réalisation, la requête est émise par la station S2 ou encore la station S3 ou encore une autre station, par exemple une station de contrôle de mission, différente des stations S1-S3 (non représentée dans la figure 3B).

Ce canal de requête CR est un canal authentifié qui ne requiert pas nécessairement la visibilité optique entre les satellites STA et STB et la station émettrice. Il peut par exemple être un canal RF ou encore un canal optique. Aussi, l'étape C est décorrélée temporellement des étapes A et B et peut donc être mise en œuvre à un instant où les satellites STA et STB ne sont pas en visibilité optique de la station émettrice, par exemple parce qu'ils sont trop éloignés de cette station ou encore parce que les perturbations atmosphériques entre les satellites STA et STB et la station émettrice sont trop importantes. Il peut être émis uniquement lorsque le besoin de communiquer de manière sécurisée entre les stations S1 et S2 apparait.

Après avoir reçu cette requête, dans une étape D, le satellite STA est adapté pour chiffrer la première clé secrète *K*₁par une méthode de chiffrement symétrique qui utilise la deuxième clé secrète *K*₂ de manière à générer un premier message crypté *KC*₁₂*.* De plus, l'étape D comprend la transmission du premier message crypté à la station commune S3 par un premier canal authentifié *CA*₁*.*

De même, après avoir reçu la requête, dans une étape E, le satellite STB est adapté pour chiffrer la quatrième clé secrète *K*₄ par une méthode de chiffrement symétrique qui utilise la troisième clé secrète *K*₃, de manière à générer un deuxième message crypté *KC*₄₃*.* Le satellite STB transmet alors un deuxième message crypté à la station commune S3 par un deuxième canal authentifié *CA₂.*

Tout comme le canal de requête CR, les canaux authentifiés *CA*₁*, CA*₂*,* ne sont pas des canaux qui requièrent nécessairement la visibilité optique entre les satellites STA et STB et la station S3 car les étapes D et E sont décorrélées temporellement des étapes A et B. Les canaux authentifiés *CA*₁*, CA*₂ peuvent donc être n'importe quels canaux classique d'opportunités authentifiés dans le domaine RF ou optique (voir plus loin).

En outre, il est entendu que l'ordre relatif du déroulement des étapes D et E est sans importance dans la méthode de l'invention. Aussi, les deux étapes D et E peuvent être mise en œuvre simultanément ou l'une après l'autre.

Après ces étapes D et E, la méthode de l'invention comprend deux étapes F et G mises en œuvre dans la station commune S3. L'étape F consiste à déchiffrer, le premier message crypté *KC*₁₂ à l'aide de la deuxième clé secrète *K*₂ de manière à obtenir la première clé secrète *K*₁ et à déchiffrer le deuxième message crypté *KC*₄₃ à l'aide de la troisième clé secrète *K*₃ de manière à obtenir la quatrième clé secrète *K*₄.

Après l'étape F, la station commune S3 est adaptée pour mettre en œuvre l'étape G consistant à chiffrer la première clé secrète *K*₁ par une méthode de chiffrement symétrique qui utilise la quatrième clé secrète *K*₄de manière à générer un troisième message crypté *KC*₁₄. De plus l'étape G comprend la transmission du troisième message crypté *KC*₁₄ à la deuxième station de communication S2 par un troisième canal authentifié *CA*₃.

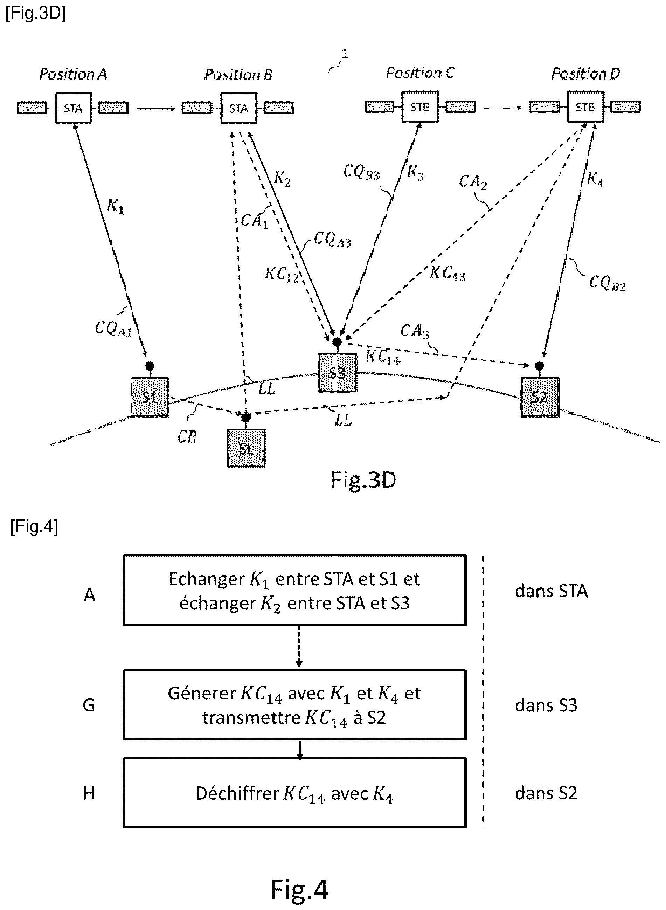

A l'issue de la méthode la figure 3A, la station S2 est apte à déchiffrer le troisième message crypté *KC*₁₄ avec la quatrième clé secrète *K*₄ qu'elle avait précédemment échangée par QKD avec le satellite STB. Il est donc apte à obtenir la première clé secrète *K*₁ qui forme alors la clé secrète sûre (voir méthode de la figure 4). Ainsi, la première et la deuxième station de communication S1, S2 sont aptes à posséder chacune la clé secrète sûre *K*₁. Les étapes mises en œuvre dans la méthode de l'invention (QKD et chiffrement symétrique) étant résistantes à la menace quantique, la méthode de l'invention permet donc de fournir une clé secrète sûre pour le chiffrage des communications entre la station S1 et la station S2.

Comme évoqué précédemment, dans l'invention, les étapes A et B d'échange des clés secrètes par QKD sont décorrélées temporellement de la distribution des messages cryptés *KC*₁₂*, KC*₄₃ à la station S3 dans les étapes D et E respectivement. Ainsi, la distribution des messages cryptés *KC*₁₂*, KC*₄₃ via les canaux *CA*₁*, CA*₂respectivement ne requiert pas nécessairement la visibilité optique entre les satellites STA, STB et la station commune S3. Concrètement, cela implique que dans l'étape D, le satellite STA peut être nettement plus éloigné de la station S3 lorsqu'il réalise la distribution du message crypté *KC*₁₂ que lorsqu'il est dans la position B pour effectuer l'échange de la clé *K*₂ avec la station S3. De même, dans l'étape E, le satellite STB peut être nettement plus éloigné de la station S3 lorsqu'il réalise la distribution du message crypté *KC*₄₃ que lorsqu'il est dans la position C pour effectuer l'échange de la clé *K*₃ avec la station S3. Cette séparation temporelle entre l'échange des clés secrètes *K*₁, *K*₂ par QKD et de la distribution des messages cryptés n'est pas présente dans les méthodes de l'art antérieur. En effet, dans ces méthodes de l'art antérieur, la distribution de la clé secrète sûre était effectuée par le satellite pendant le survol d'une station quasi-simultanément après établissement d'une clé de chiffrage par QKD pour chiffrer la transmission de la clé secrète sûre entre le satellite et la station (voir figure 2B).

La solution de l'invention permet d'assouplir considérablement la planification des opérations par rapport à la méthode de l'art antérieur illustrée en figure 2B. De plus, la solution de l'invention permet de retarder la distribution des messages cryptés par exemple en fonction des besoins des utilisateurs des stations S1 et S2 et donc d'éviter un stockage prolongé des clés secrètes *K*₁, *K*₄ et des messages cryptés dans la station commune S3 qui pourrait potentiellement être compromise. De plus, la solution de l'invention permet de ne pas avoir à mettre en œuvre des trajectoires des deux satellites STA, STB qui survolent successivement la première et la deuxième stations S1, S2 que l'on souhaite connecter : le travail peut être partagé entre les satellites STA, STB par paquets de stations (S1, S3) et (S3, S2) et non par paquets de paires de stations (S1, S2) comme cela est habituellement envisagé dans l'art antérieur.

Il est entendu que le fait de décorréler temporellement les étapes A et B du reste des étapes de l'invention implique que les satellites STA et STB puissent stocker de manière sécurisée les clés *K*₁, *K*₂ et les clés *K*₃, *K*₄ respectivement après leur échange par QKD.

Selon l'invention, la méthode de chiffrement symétrique des étapes D, E et G peut être toute méthode par bloc ou par flot connue de l'homme de l'art par exemple la méthode du masque jetable ou la méthode AES (pour *Advanced Encryption Standard* en anglais) ou encore la méthode Triple DES.

Dans l'invention, l'étape G peut alternativement consister en la génération d'un troisième message crypté *KC*₄₁ généré en chiffrant la quatrième clé secrète *K*₄ par une méthode de chiffrement symétrique qui utilise la première clé secrète *K*₁, et en la transmission du troisième message crypté *KC*₁₄ à la station de communication S1 par un troisième canal authentifié *CA*₃. Ces deux formulations sont équivalentes, la seule différence étant que, dans la première alternative, la clé *K*₁ est la clé secrète sûre pour le chiffrage des communications entre la station S1 et la station S2 alors que, dans la deuxième alternative, la clé *K*₄ est la clé secrète sûre.

Comme évoqué précédemment, les canaux *CA*₁ et *CA₂* peuvent être n'importe quels canaux classiques d'opportunité authentifiés. Selon un mode de réalisation préféré de l'invention, noté MR, les canaux *CA*₁ et *CA*₂ sont différents des canaux quantiques CQ_{A3} et CQ_{B3} respectivement.

Selon un mode de réalisation de la méthode de l'invention noté MP, dans l'étape A, la sous étape de réconciliation nécessaire à l'échange de la clé secrète *K*₂ est effectuée via le canal *CA*₁*.* De même, dans l'étape B, la sous étape de réconciliation nécessaire à l'échange de la clé secrète *K*₃ est effectuée via le canal *CA₂.* En effet, ces sous étapes de réconciliation, tout comme les étapes de distribution des messages cryptés *KC*₁₂*, KC*₄₃ ne requiert pas que les satellites STA et STB soient en visibilité optique de la station commune S3. Ainsi, il est possible de simplifier l'architecture du réseau du système 1 en mutualisant certaines des liaisons nécessaire à son fonctionnement. Ce mode de réalisation MP est compatible avec le mode de réalisation MR.

Selon un autre mode de réalisation, compatible avec le mode de réalisation MR et le mode de réalisation MP, le premier canal authentifié et/ou le deuxième canal authentifié sont chacun une liaison bidirectionnelle de télémesure/télécommande du premier satellite et du deuxième satellite respectivement.. On appelle ici « liaison bidirectionnelle de télémesure/télécommande du satellite » une liaison permettant d'une part le contrôle, la mise en configuration et la programmation de la mission du satellite et d'autre part la mesure de la configuration et de l'état du satellite. Ainsi, il est possible de simplifier l'architecture du réseau du système 1 en mutualisant certaines des liaisons nécessaire à son fonctionnement.

Selon un autre de mode de réalisation du système de l'invention, le premier canal authentifié et le deuxième canal authentifié sont chacun un lien d'ancrage RF ou optique d'un service de télécommunication porté par le premier satellite et le deuxième satellite respectivement. Ce mode de réalisation permet lui aussi simplifier l'architecture du réseau du système 1.

Le système selon l'invention est un système dans laquelle le premier canal authentifié et le deuxième canal authentifié sont chacun un lien d'ancrage RF ou optique d'un service de télécommunication porté par le premier satellite et le deuxième satellite respectivement.

La figure 3C illustre schématique un mode de réalisation du système 1 de la figure 3B, dans lequel le canal authentifié *CA*₂ est relayé par un satellite additionnel SR via une liaison inter-satellite LI reliant le satellite STB et le satellite additionnel SR. Cette liaison LI est par exemple une liaison optique ou RF. Ce mode de réalisation permet d'améliorer la disponibilité du système 1, par exemple quand le satellite STB est trop éloigné de la station S3 pour pouvoir communiquer avec lui directement sans l'intermédiaire du satellite additionnel SR. De manière plus générale, selon un mode de réalisation du système 1 de l'invention le premier et/ou le deuxième canal authentifié *CA*₁*, CA*₂ sont/est relayé(s) par le satellite additionnel SR via une liaison inter-satellite LI reliant le satellite additionnel SR et respectivement le satellite STA et STB.

Avantageusement, selon un mode de réalisation du système 1 de la figure 3C, le satellite additionnel SR est configuré pour évoluer à une altitude supérieure à celles nuages et des turbulences atmosphériques, par exemple dans la stratosphère ou en orbite. De plus, la portion du canal *CA*₂ entre la station S3 et le satellite additionnel SR utilise une longueur d'onde dans le domaine RF, visible ou LWIR afin de ne pas subir d'éventuelles perturbations liées aux conditions météorologiques (ex : nuages). Enfin, la portion du canal *CA*₂ entre le satellite STB et le satellite additionnel SR utilise une longueur permettant de maximiser la capacité de la transmission, par exemple une longueur d'onde dans le domaine SWIR (pour *Short Wavelength InfraRed,* typiquement entre 1 *µm* et 2,7 *µm*)*.* Ce mode de réalisation permet d'optimiser le fonctionnement du système 1 en le rendant plus robuste aux aléas météorologiques.

La figure 3D illustre schématiquement un mode de réalisation du système 1 de l'invention dans lequel la requête de communication émise par la station émettrice (par exemple la station S1 comme illustré dans la figure 3D) est relayée aux satellites STA et STB par une station locale SL apte à communiquer avec ces satellites via une liaison locale authentifiée LL. Ce mode de réalisation est avantageux afin de tirer parti d'un éventuel survol de la station SL par les satellites STA et STB alors qu'ils sont trop éloignés de la station émettrice pour que cette dernière puisse leur transmettre la requête de communication directement.

La figure 4 illustre un mode de réalisation préféré de la méthode de l'invention. Cette méthode est particulièrement adaptée pour être mise en œuvre par le système 1 de la figure 3B. La méthode de la figure 4 comprend une étape additionnelle H qui consiste en déchiffrer, dans la deuxième station de communication S2, le troisième message crypté *KC*₁₄ à l'aide de la quatrième clé secrète *K*₄. Ainsi, la station S2 obtient la première clé secrète *K*₁.

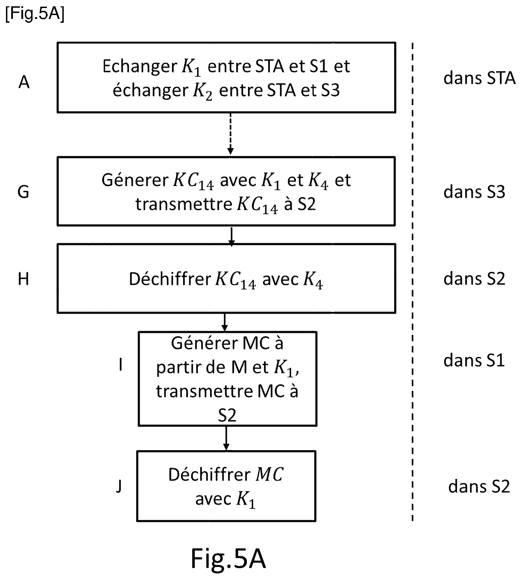

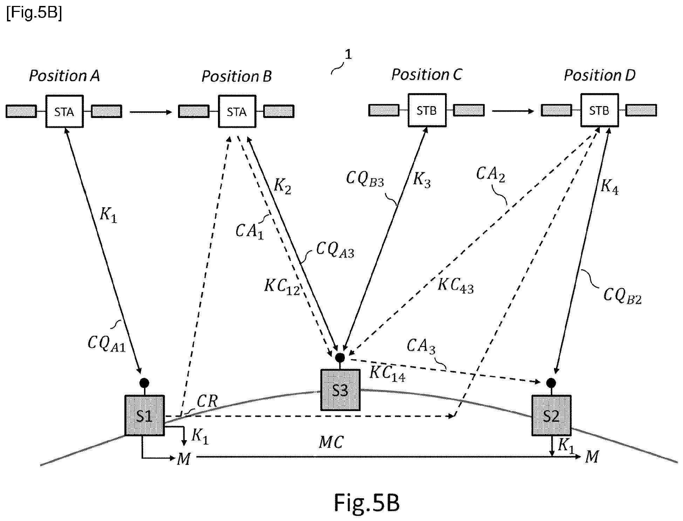

Cette étape H est nécessaire afin que les stations S1 et S2 possèdent toutes les deux la clé secrète sûre *K*₁ qu'elles pourront ultérieurement utiliser pour chiffrer des messages non aléatoires qu'elles souhaitent échanger (voir figures 5A et 5B). En effet, compte tenu du fait que le chiffrement de la clé secrète sûre *K*₁ dans l'étape G est effectué par une méthode de chiffrement symétrique, le déchiffrement du premier message crypté *KC*₁₄ est effectué avec la même clé que celle utilisée pour le chiffrage, c'est à dire la quatrième clé secrète K₄. Ainsi, la méthode de la figure 4 permet de facilement distribuer de manière sûre et inviolable -même par attaque quantique- une clé secrète sûre *K*₁ pour chiffrer des communications entre la station S1 et la station S2 en relâchant les contraintes distribution de clés comparativement aux autres méthodes de l'art antérieur.

Selon un mode de réalisation de la méthode de la figure 4, les étapes A à H sont répétées une pluralité de fois afin de former une pluralité de clés secrètes sûres chacune destinée à sécuriser des communications entre la station S1 et la station S2.

Dans un mode de réalisation préféré de l'invention, la méthode de chiffrement symétrique est la méthode du masque jetable. Dans ce mode de réalisation, les clés secrètes *K*₁, *K*₂, *K₃*, *K*₄*,* et les messages cryptés *KC*₁₂*, KC*₄₃*, KC*₄₁ sont codées en binaire. Ainsi, les étapes de chiffrement sont chacune effectuées par la porte logique XOR en combinant les clés secrètes respectivement impliquées dans ladite étape de chiffrement. Par exemple, dans l'étape D, l'étape de chiffrement est obtenue en combinant la première et la deuxième clés secrètes *K*₁, *K*₂*,* par l'opération logique suivante *KC*₁₂ = *K*₁ ⊕ *K*₂.De même, les étapes de déchiffrement sont chacune effectuées par la porte logique XOR combinant le message crypté avec la clé secrète chiffrée qui sont respectivement impliqués dans ladite étape de déchiffrement. Par exemple, dans l'étape F, l'étape de déchiffrement du premier message crypté *KC*₁₂ est effectuée par l'opération logique suivante : *KC*₁₂⊕*K*₂=*K*₁⊕*K*₂⊕*K*₂ = *K*₁, ce qui permet à la station S3 d'obtenir la clé *K*₁. Ce mode de réalisation est celui qui permet la mise en œuvre de l'invention la moins complexe.

Afin d'assurer la sureté de la technique du masque jetable dans l'invention, toutes les étapes mettant en œuvre la technique du masque jetable combinent deux clés secrètes ou une clé secrète et une clé et un message crypté qui sont de même longueur (*key size* en anglais).

La figure 5A illustre un mode de réalisation préféré de la méthode de la figure 4, permettant d'échanger de manière sécurisée un message non aléatoire M entre la station S1 et la station S2. La figure 5B illustre schématiquement un mode de réalisation du système de l'invention adapté pour mettre en œuvre la méthode de la figure 5A. En plus des étapes précédemment détaillées, la méthode de la figure 5A comprend deux étapes ultérieures I et J qui consistent en :
I - chiffrer, dans la première station de communication S1, un message non aléatoire M à l'aide d'une première clé sécrète *K*₁ et transmettre le message non aléatoire chiffrée MC à la deuxième station de communication S2,
J- déchiffrer le message non aléatoire chiffré à l'aide de la première clé sécrète *K*₁ en étape F. Ainsi, la station S2 obtient le message non aléatoire M de manière parfaitement sûre.

Selon un mode de réalisation différent de celui illustré dans la figure 5B, le message M est échangé depuis la station S2 vers la station S1.

Selon un mode de réalisation préféré de la méthode de la figure 5A, les étapes I et J sont répétées une pluralité *n* de fois afin de chiffrer une pluralité de communication entre la station S1 et la station S2. Le nombre *n* de répétition des étapes I et J est inférieur à un nombre dit critique calculé à partir d'une crypto-période de la clé utilisée pour le chiffrement du message M et le déchiffrement du message MC. Cette caractéristique permet d'éviter la compromission des messages échangés et est pertinente lorsqu'on encode un message M non aléatoire (par exemple du langage humain).. On appelle ici « crypto-période », le nombre d'utilisations d'une clé dans un algorithme de chiffrement qui ne doit pas être dépassé afin de garantir la sécurité du message crypté par cette clé.

Enfin, un autre objet de l'invention est la station commune S3 du système 1 décrit précédemment. La station S3 est donc adaptée pour :
- recevoir la deuxième clé secrète *K*₂ échangée via le canal quantique CQ_{A3}
- recevoir la troisième clé secrète *K*₃ échangée via le canal quantique CQ_{B3}
- recevoir, par le canal *CA*₁*,* le premier message crypté *KC*₁₂ transmis par le premier satellite STA
- recevoir, par le canal *CA*_{2,} le deuxième message crypté *KC*₄₃ transmis par le deuxième satellite STB
- déchiffrer le premier message crypté *KC*₁₂ à l'aide de la deuxième clé secrète *K*₂ de manière à obtenir la première clé secrète *K*₁, et déchiffrer, le deuxième message crypté *KC*₄₃ à l'aide de la troisième clé secrète *K*₃ de manière à obtenir la quatrième clé secrète *K*₄
- chiffrer la première clé secrète*K*₁ par une méthode de chiffrement symétrique qui utilise la quatrième clé secrète *K*₄ de manière à générer le troisième message crypté *KC*₁₄ et transmettre le troisième message crypté à la deuxième station de communication S2 par un troisième canal authentifié *CA*₃.

La station commune S3 du système 1 est donc adaptée pour mettre en œuvre une méthode dans laquelle les étapes sont « localisées » en une même zone géographique (c'est-à-dire la station S3), au lieu d'être distribuée sur différentes stations et satellites espacés de plusieurs centaines ou milliers de kilomètres.

## Revendications

1. Méthode de partage de clé secrète sûre destinée à sécuriser des communications entre une première station de communication (S1) et une deuxième station de communication (S2), ladite méthode comprenant les étapes suivantes :
A. échanger, via un canal quantique (CQ_{A1}) reliant un premier satellite (STA) à la première station de communication (S1), une première clé secrète (*K*₁) et échanger, via un canal quantique (CQ_{A3}) reliant le premier satellite (STA) à une troisième station de communication dit station commune (S3), une deuxième clé secrète (*K*₂)
B. échanger, via un canal quantique (CQ_{B3}) reliant un deuxième satellite (STB) à la station commune (S3), une troisième clé secrète (*K*₃) et échanger, via un canal quantique (CQ_{B2}) reliant le deuxième satellite (STB) à la deuxième station de communication (S2), une quatrième clé secrète (*K*₄)
C. recevoir, dans le premier et le deuxième satellites (STA, STB), une requête de communication entre la première et la deuxième station de communication,
D. chiffrer, dans le premier satellite, la première clé secrète (*K*₁) par une méthode de chiffrement symétrique qui utilise la deuxième clé secrète (*K*₂), de manière à générer un premier message crypté (*KC*₁₂) et transmettre le premier message crypté à la station commune (S3) par un premier canal authentifié (*CA*₁)
E. chiffrer, dans le deuxième satellite, la quatrième clé secrète (*K*₄) par une méthode de chiffrement symétrique qui utilise la troisième clé secrète (*K*₃), de manière à générer un deuxième message crypté (*KC*₄₃) et transmettre le deuxième message crypté à la station commune (S3) par un deuxième canal authentifié (*CA*₂)
F. dans la station commune (S3), déchiffrer, le premier message crypté (*KC*₁₂) à l'aide de la deuxième clé secrète (*K*₂), de manière à obtenir la première clé secrète (*K*₁), et déchiffrer le deuxième message crypté (*KC*₄₃) à l'aide de la troisième clé secrète (*K*₃), de manière à obtenir la quatrième clé secrète (*K*₄)
G. chiffrer, dans la station commune (S3), la première clé secrète (*K*₁) par une méthode de chiffrement symétrique qui utilise la quatrième clé secrète (*K*₄)*,* de manière à générer un troisième message crypté (*KC*₁₄) et transmettre le troisième message crypté à la deuxième station de communication (S2) par un troisième canal authentifié (*CA*₃)*.*

2. Méthode selon la revendication précédente, comprenant une étape ultérieure H consistant à déchiffrer, dans la deuxième station de communication, le troisième message crypté (*KC*₁₄) à l'aide de la quatrième clé secrète (*K*₄)*,* de manière à obtenir la première clé secrète (*K*₁), la première clé secrète formant la clé secrète sûre.

3. Méthode selon la revendication précédente, ladite méthode de chiffrement symétrique est la méthode du masque jetable et dans laquelle les clés secrètes (*K*₁*, K₂, K*₃, *K*₄)*,* et les messages cryptés (*KC*₁₂*, KC*₄₃*, KC*₄₁) sont codées en binaire, les étapes de chiffrement étant chacune effectuée par la porte logique XOR combinant les clés secrètes respectivement impliquées dans ladite étape de chiffrement, les étapes de déchiffrement étant chacune effectuée par la porte logique XOR combinant le message crypté avec la clé secrète chiffrée qui sont respectivement impliqués dans ladite étape de déchiffrement.

4. Méthode selon l'une quelconque des revendications 2 à 3, comprenant deux étapes ultérieures I et J qui consistent à :
I. chiffrer, dans la première station de communication, un message non aléatoire (M) à l'aide de la première clé sécrète puis à transmettre le message non aléatoire chiffrée (MC) à la deuxième station de communication, par un canal dit clair
J. déchiffrer, dans la deuxième station de communication, ledit message non aléatoire chiffré à l'aide de la première clé sécrète.

5. Méthode selon l'une quelconque des revendications 2 à 4, dans laquelle les étapes A à H sont répétées une pluralité de fois afin de former une pluralité de clés secrètes sûres.

6. Méthode selon l'une quelconque des revendications précédentes, dans laquelle dans l'étape A, l'échange de la deuxième clé sécrète requiert une sous étape de réconciliation effectuée via ledit premier canal authentifié et/ou,
dans l'étape B, l'échange de la troisième clé sécrète requiert une sous étape de réconciliation effectuée via ledit deuxième canal authentifié.

7. Méthode selon l'une quelconque des revendications 2 à 6, dans laquelle les étapes A à H sont répétées une pluralité de fois avec une paire de stations de communication différente de la première et la deuxième station de communication.

8. Système de communication comprenant une première et une deuxième stations de communication (S1, S2), une troisième station de communication dite station commune (S3) et un premier et un deuxième satellites (STA, STB), ledit premier satellite (STA) étant adapté pour échanger, via un canal quantique (CQ_{A1}) reliant le premier satellite (STA) à la première station de communication (S1), une première clé secrète (K₁) et pour échanger, via un canal quantique (CQ_{A3}) reliant le premier satellite (STA) à la station commune (S3), une deuxième clé secrète (*K*₂)
ledit deuxième satellite (STB) étant adapté pour échanger, via un canal quantique (CQ_{B3}) reliant le deuxième satellite (STB) à la station commune (S3), une troisième clé secrète (*K*₃) et pour échanger, via un canal quantique (CQ_{B2}) reliant le deuxième satellite (STB) à la deuxième station de communication, une quatrième clé secrète (*K*₄)
le premier satellite étant en outre adapté pour recevoir une requête de communication entre la première et la deuxième station de communication transmise via un canal clair de requête (CR), et après quoi chiffrer la première clé secrète (*K*₁) par une méthode de chiffrement symétrique qui utilise la deuxième clé secrète (*K*₂), de manière à générer un premier message crypté (*KC*₁₂) et transmettre le premier message crypté à la station commune (S3) par un premier canal authentifié (*CA*₁)*,*
le deuxième satellite étant en outre adapté pour recevoir ladite requête de communication, et après quoi chiffrer la quatrième clé secrète (*K*₄) par une méthode de chiffrement symétrique qui utilise la troisième clé secrète (*K*₃), de manière à générer un deuxième message crypté (*KC*₄₃) et transmettre le deuxième message crypté à la station commune (S3) par un deuxième canal authentifié (*CA*₂)*,*
la station commune étant adaptée pour :
∘ déchiffrer le premier message crypté (*KC*₁₂) à l'aide de la deuxième clé secrète (*K*₂), de manière à obtenir la première clé secrète (*K*₁), et déchiffrer, dans la station commune (S3), le deuxième message crypté (*KC*₄₃) à l'aide de la troisième clé secrète (*K*₃), de manière à obtenir la quatrième clé secrète (*K*₄)
∘ chiffrer la première clé secrète (*K*₁) par une méthode de chiffrement symétrique qui utilise la quatrième clé secrète (*K*₄)*,* de manière à générer un troisième message crypté (*KC*₁₄) et transmettre le troisième message crypté à la deuxième station de communication (S2) par un troisième canal authentifié (*CA*₃)

9. Système selon la revendication précédente, dans lequel la deuxième station de communication est adaptée pour déchiffrer le troisième message crypté (*KC*₁₄) à l'aide de la quatrième clé secrète (*K*₄)*,* de manière à obtenir la première clé secrète (*K*₁), la première clé secrète formant la clé secrète sûre.

10. Système selon la revendication 8 ou 9, dans lequel le premier canal authentifié et/ou le deuxième canal authentifié sont chacun une liaison bidirectionnelle de télémesure/télécommande du premier satellite et du deuxième satellite respectivement.

11. Système selon l'une quelconque des revendications 8 à 10, dans lequel le premier canal authentifié est relayé par un satellite additionnel (SR) via une liaison inter-satellite optique ou RF (LI) reliant le satellite additionnel et le premier satellite et/ou le deuxième canal authentifié est relayé par un satellite additionnel (SR) via une liaison inter-satellite optique ou RF (LI) reliant le satellite additionnel et le deuxième satellite.

12. Système selon l'une quelconque des revendications 8 à 9 ou 11, dans lequel le premier canal authentifié et le deuxième canal authentifié sont chacun un lien d'ancrage RF ou optique d'un service de télécommunication porté par le premier satellite et le deuxième satellite respectivement.

13. Système selon l'une quelconque des revendications 8 à 11, le premier canal authentifié est différent du canal quantique reliant le premier satellite à ladite station de commune (S3) et le deuxième canal authentifié est différent du canal quantique reliant le deuxième satellite à ladite station de commune (S3) ..

14. Système selon l'une quelconque des revendications 8 à 12, dans lequel le canal clair de requête est relayé par une station locale (SL) apte à communiquer avec le premier et le deuxième satellite via une liaison locale authentifié (LL).

15. Station de communication dite station commune (S3), ladite station étant adaptée pour :
- recevoir une deuxième clé secrète (*K*₂) échangée via un canal quantique (CQ_{A3}) reliant un premier satellite (STA) et la station commune (S3),
- recevoir une troisième clé secrète (*K*₃) échangée via un canal quantique (CQ_{B3}) reliant un deuxième satellite (STB) à la station commune (S3)
- recevoir, par un premier canal authentifié, un premier message crypté (*KC*₁₂) transmis par le premier satellite et généré par une méthode de chiffrement symétrique qui chiffre, avec la deuxième clé secrète, une première clé secrète échangée via un canal quantique (CQ_{A1}) reliant le premier satellite (STA) à une première station de communication (S1), et
- recevoir, par un deuxième canal authentifié, un deuxième message crypté (*KC*₄₃) transmis par le deuxième satellite et généré par une méthode de chiffrement symétrique qui chiffre, avec la troisième clé secrète, une quatrième clé secrète échangée via un canal quantique (CQ_{B2}) reliant le deuxième satellite (STB) à une deuxième station de communication (S2),
- déchiffrer le premier message crypté (*KC*₁₂) à l'aide de la deuxième clé secrète (*K*₂), de manière à obtenir la première clé secrète (*K*₁), et déchiffrer le deuxième message crypté (*KC*₄₃) à l'aide de la troisième clé secrète (*K*₃), de manière à obtenir la quatrième clé secrète (*K*₄)
- chiffrer la première clé secrète (*K*₁) par une méthode de chiffrement symétrique qui utilise la quatrième clé secrète (*K*₄)*,* de manière à générer un troisième message crypté (*KC*₁₄) et transmettre le troisième message crypté à la deuxième station de communication (S2) par un troisième canal authentifié.

## Patentansprüche

1. Verfahren zur gemeinsamen Nutzung von sicheren geheimen Schlüsseln, die dazu vorgesehen sind, Kommunikationen zwischen einer ersten Kommunikationsstation (S1) und einer zweiten Kommunikationsstation (S2) zu sichern, wobei das Verfahren die folgenden Schritte umfasst:
A. Austauschen, über einen Quantenkanal (CQ_{A1}), der einen ersten Satelliten (STA) mit der ersten Kommunikationsstation (S1) verbindet, eines ersten geheimen Schlüssels (*K*₁), und Austauschen, über einen Quantenkanal (CQ_{A3}), der den ersten Satelliten (STA) mit einer als gemeinsame Station (S3) bezeichneten dritten Kommunikationsstation verbindet, eines zweiten geheimen Schlüssels (*K*₂)
B. Austauschen, über einen Quantenkanal (CQ_{B3}), der einen zweiten Satelliten (STB) mit der gemeinsamen Station (S3) verbindet, eines dritten geheimen Schlüssels (*K*₃), und Austauschen, über einen Quantenkanal (CQ_{B2}), der den zweiten Satelliten (STB) mit der zweiten Kommunikationsstation (S2) verbindet, eines vierten geheimen Schlüssels (*K*₄)
C. Empfangen, im ersten und zweiten Satelliten (STA, STB), einer Kommunikationsanfrage zwischen der ersten und der zweiten Kommunikationsstation,
D. Verschlüsseln, im ersten Satelliten, des ersten geheimen Schlüssels (*K*₁) durch ein symmetrisches Verschlüsselungsverfahren, das den zweiten geheimen Schlüssel (*K*₂) verwendet, sodass eine erste verschlüsselte Nachricht (*KC*₁₂) erzeugt wird, und Übertragen der ersten verschlüsselten Nachricht an die gemeinsame Station (S3) über einen ersten authentifizierten Kanal (*CA*₁)
E. Verschlüsseln, im zweiten Satelliten, des vierten geheimen Schlüssels (*K*₄) durch ein symmetrisches Verschlüsselungsverfahren, das den dritten geheimen Schlüssel (*K*₃) verwendet, sodass eine zweite verschlüsselte Nachricht (*KC*₄₃) erzeugt wird, und Übertragen der zweiten verschlüsselten Nachricht an die gemeinsame Station (S3) durch einen zweiten authentifizierten Kanal (*CA*₂)
F. in der gemeinsamen Station (S3), Entschlüsseln der ersten verschlüsselten Nachricht (*KC*₁₂) mithilfe des zweiten geheimen Schlüssels (*K*₂), sodass der erste geheime Schlüssel (K₁) erhalten wird, und Entschlüsseln der zweiten verschlüsselten Nachricht (*KC*₄₃) mithilfe des dritten geheimen Schlüssels (*K*₃), sodass der vierte geheime Schlüssel (*K*₄) erhalten wird
G. Verschlüsseln, in der gemeinsamen Station (S3), des ersten geheimen Schlüssels (*K*₁) durch ein symmetrisches Verschlüsselungsverfahren, das den vierten geheimen Schlüssel (*K*₄) verwendet, sodass eine dritte verschlüsselte Nachricht (*KC*₁₄) erzeugt wird, und Übertragen der dritten verschlüsselten Nachricht an die zweite Kommunikationsstation (S2) durch einen dritten authentifizierten Kanal (*CA*₃)*.*

2. Verfahren nach dem vorstehenden Anspruch, umfassend einen weiteren Schritt H, der darin besteht, in der zweiten Kommunikationsstation die dritte verschlüsselte Nachricht (*KC*₁₄) mithilfe des vierten geheimen Schlüssels (*K*₄) zu entschlüsseln, sodass der erste geheime Schlüssel (*K*₁) erhalten wird, wobei der erste geheime Schlüssel den sicheren geheimen Schlüssel bildet.

3. Verfahren nach dem vorstehenden Anspruch, wobei es sich bei dem symmetrischen Verschlüsselungsverfahren um das Einmalverschlüsselungsverfahren handelt und wobei die geheimen Schlüssel (*K*₁*, K₂, K*₃*, K*₄) und die verschlüsselten Nachrichten (*KC*_{12,}*, KC*₄₃*, KC*₄₁) binär codiert sind, wobei die Verschlüsselungsschritte jeweils durch das Logikgatter XOR durchgeführt werden, das die jeweils im Verschlüsselungsschritt beteiligten geheimen Schlüssel kombiniert, wobei die Entschlüsselungsschritte jeweils durch das Logikgatter XOR durchgeführt werden, das die verschlüsselte Nachricht mit dem geheimen verschlüsselten Schlüssel kombiniert, die jeweils im Entschlüsselungsschritt beteiligt sind.

4. Verfahren nach einem der Ansprüche 2 bis 3, umfassend zwei weitere Schritte I und J, die aus Folgendem bestehen:
I. Verschlüsseln, in der ersten Kommunikationsstation, einer nicht zufälligen Nachricht (M) mithilfe des ersten geheimen Schlüssels, dann Übertragen der verschlüsselten nicht zufälligen Nachricht (MC) an die zweite Kommunikationsstation durch einen als klar bezeichneten Kanal,
J. Entschlüsseln, in der zweiten Kommunikationsstation, der verschlüsselten nicht zufälligen Nachricht mithilfe des ersten geheimen Schlüssels.

5. Verfahren nach einem der Ansprüche 2 bis 4, wobei die Schritte A bis H eine Vielzahl von Malen wiederholt werden, um eine Vielzahl von sicheren geheimen Schlüsseln zu bilden.

6. Verfahren nach einem der vorstehenden Ansprüche, wobei im Schritt A der Austausch des zweiten geheimen Schlüssels einen Teilschritt des Abgleichs erfordert, der über den ersten authentifizierten Kanal durchgeführt wird, und/oder
im Schritt B der Austausch des dritten geheimen Schlüssels einen Teilschritt des Abgleichs erfordert, der über den zweiten authentifizierten Kanal durchgeführt wird.

7. Verfahren nach einem der Ansprüche 2 bis 6, wobei die Schritte A bis H eine Vielzahl von Malen mit einem von der ersten und der zweiten Kommunikationsstation unterschiedlichen Paar von Kommunikationsstationen wiederholt werden.

8. Kommunikationssystem, umfassend eine erste und eine zweite Kommunikationsstation (S1, S2), eine dritte Kommunikationsstation, die als gemeinsame Station (S3) bezeichnet wird, und einen ersten und einen zweiten Satelliten (STA, STB), wobei der erste Satellit (STA) angepasst ist zum Austauschen, über einen Quantenkanal (CQ_{A1}), der den ersten Satelliten (STA) mit der ersten Kommunikationsstation (S1) verbindet, eines ersten geheimen Schlüssels (*K*₁), und zum Austauschen, über einen Quantenkanal (CQ_{A3}), der den ersten Satelliten (STA) mit der gemeinsamen Station (S3) verbindet, eines zweiten geheimen Schlüssels (*K*₂)
wobei der zweite Satellit (STB) angepasst ist zum Austauschen, über einen Quantenkanal (CQ_{B3}), der den zweiten Satelliten (STB) mit der gemeinsamen Station (S3) verbindet, eines dritten geheimen Schlüssels (*K*₄)*,* und zum Austauschen, über einen Quantenkanal (CQ_{B2}), der den zweiten Satelliten (STB) mit der zweiten Kommunikationsstation verbindet, eines vierten geheimen Schlüssels (*K*₄)
wobei der erste Satellit weiter angepasst ist zum Empfangen einer Kommunikationsanfrage zwischen der ersten und der zweiten Kommunikationsstation, die über einen klaren Anfragekanal (CR) übertragen wird, und daraufhin zum Verschlüsseln des ersten geheimen Schlüssels (*K*₁) durch ein symmetrisches Verschlüsselungsverfahren, das den zweiten geheimen Schlüssel (*K*₂) verwendet, sodass eine erste verschlüsselte Nachricht (*KC*₁₂) erzeugt wird, und Übertragen der ersten verschlüsselten Nachricht an die gemeinsame Station (S3) durch einen ersten authentifizierten Kanal (*CA*₁)*,*
wobei der zweite Satellit weiter angepasst ist zum Empfangen der Kommunikationsanfrage und daraufhin zum Verschlüsseln des vierten geheimen Schlüssels (*K*₄) durch ein symmetrisches Verschlüsselungsverfahren, das den dritten geheimen Schlüssel (*K*₃) verwendet, sodass eine zweite verschlüsselte Nachricht (*KC*₄₃) erzeugt wird, und Übertragen der zweiten verschlüsselten Nachricht an die gemeinsame Station (S3) durch einen zweiten authentifizierten Kanal (*CA*₂)*,*
wobei die gemeinsame Station angepasst ist zum:
- Entschlüsseln der verschlüsselten ersten Nachricht (*KC*₁₂) mithilfe des zweiten geheimen Schlüssels (*K*₂), sodass der erste geheime Schlüssel (*K*₁) erhalten wird, und Entschlüsseln, in der gemeinsamen Station (S3), der zweiten verschlüsselten Nachricht (*KC*₄₃) mithilfe des dritten geheimen Schlüssels (*K*₃), sodass der vierte geheime Schlüssel (*K*₄) erhalten wird
- Verschlüsseln des ersten geheimen Schlüssels (K₁) durch ein symmetrisches Verschlüsselungsverfahren, das den vierten geheimen Schlüssel (*K*₄) verwendet, sodass eine dritte verschlüsselte Nachricht (*KC*₁₄) erzeugt wird, und Übertragen der dritten verschlüsselten Nachricht an die zweite Kommunikationsstation (S2) durch einen dritten authentifizierten Kanal (*CA*₃)

9. System nach dem vorstehenden Anspruch, wobei die zweite Kommunikationssystem angepasst ist zum Entschlüsseln der dritten verschlüsselten Nachricht (*KC*₁₄) mithilfe des vierten geheimen Schlüssels (*K*₄)*,* sodass der erste geheime Schlüssel (*K*₁) erhalten wird, wobei der erste geheime Schlüssel den sicheren geheimen Schlüssel bildet.

10. System nach Anspruch 8 oder 9, wobei der erste authentifizierte Kanal und/oder der zweite authentifizierte Kanal jeweils eine bidirektionale Fernmess-/Fernsteuerungsverbindung des ersten Satelliten bzw. des zweiten Satelliten sind.

11. System nach einem der Ansprüche 8 bis 10, wobei der erste authentifizierte Kanal durch einen zusätzlichen Satelliten (SR) über eine optische Verbindung zwischen Satelliten oder HF (LI), die den zusätzlichen Satelliten und den ersten Satelliten verbindet, angeschlossen ist, und/oder wobei der zweite authentifizierte Kanal durch einen zusätzlichen Satelliten (SR) über eine optische Verbindung zwischen Satelliten oder HF (LI), die den zusätzlichen Satelliten und den zweiten Satelliten verbindet, angeschlossen ist.

12. System nach einem der Ansprüche 8 bis 9 oder 11, wobei der erste authentifizierte Kanal und der zweite authentifizierte Kanal jeweils eine HF- oder optische Ankerverbindung eines von dem ersten Satelliten bzw. dem zweiten Satelliten getragenen Telekommunikationsdienstes sind.

13. System nach einem der Ansprüche 8 bis 11, wobei sich der erste authentifizierte Kanal vom Quantenkanal unterscheidet, der den ersten Satelliten mit der gemeinsamen Station (S3) verbindet, und sich der zweite authentifizierte Kanal vom Quantenkanal unterscheidet, der den zweiten Satelliten mit der gemeinsamen Station (S3) verbindet.

14. System nach einem der Ansprüche 8 bis 12, wobei der klare Anfragekanal durch eine lokale Station (SL) angeschlossen ist, die geeignet ist, mit dem ersten und dem zweiten Satelliten über eine lokale authentifizierte Verbindung (LL) zu kommunizieren.

15. Als gemeinsame Station (S3) bezeichnete Kommunikationsstation, wobei die Station angepasst ist zum:
- Empfangen eines zweiten geheimen Schlüssels (*K*₂), der über einen Quantenkanal (CQ_{A3}) ausgetauscht wird, der einen ersten Satelliten (STA) und die gemeinsame Station (S3) verbindet,
- Empfangen eines dritten geheimen Schlüssels (*K*₃), der über einen Quantenkanal (CQ_{B3}) ausgetauscht wird, der einen zweiten Satelliten (STB) mit der gemeinsamen Station (S3) verbindet,
- Empfangen, durch einen ersten authentifizierten Kanal, einer ersten verschlüsselten Nachricht (*KC*₁₂)*,* die von dem ersten Satelliten übertragen wird und durch ein symmetrisches Verschlüsselungsverfahren erzeugt wird, das mit dem zweiten geheimen Schlüssel einen ersten geheimen Schlüssel verschlüsselt, der über einen Quantenkanal (CQ_{A1}) ausgetauscht wird, der den ersten Satelliten (STA) mit dem ersten Kommunikationsstation (S1) verbindet, und
- Empfangen, über einen zweiten authentifizierten Kanal, einer zweiten verschlüsselten Nachricht (*KC*₄₃)*,* die von dem zweiten Satelliten übertragen wird und durch ein symmetrisches Verschlüsselungsverfahren erzeugt wird, das mit dem dritten geheimen Schlüssel einen vierten geheimen Schlüssel verschlüsselt, der über einen Quantenkanal (*CQ*_{B2}) ausgetauscht wird, der den zweiten Satelliten (STB) mit einer zweiten Kommunikationsstation (S2) verbindet, und
- Entschlüsseln der ersten verschlüsselten Nachricht (*KC*₁₂) mithilfe des zweiten geheimen Schlüssels (*K*₂), sodass der erste geheime Schlüssel (*K*₁) erhalten wird, und Entschlüsseln der zweiten verschlüsselten Nachricht (*KC*₄₃) mithilfe des dritten geheimen Schlüssels (*K*₃), sodass der vierte geheime Schlüssel (*K*₄) erhalten wird
- Verschlüsseln des ersten geheimen Schlüssels (*K*₁) durch ein symmetrisches Verschlüsselungsverfahren, das den vierten geheimen Schlüssel (*K*₄) verwendet, sodass eine dritte verschlüsselte Nachricht (*KC*₁₄) erzeugt wird, und Übertragen der dritten verschlüsselten Nachricht an die zweite Kommunikationsstation (S2) durch einen dritten authentifizierten Kanal.

## Claims

1. Method for sharing a secure secret key intended to secure communications between a first communication station (S1) and a second communication station (S2), said method comprising the following steps:
A. exchanging, via a quantum channel (CQ_{A1}) connecting a first satellite (STA) to the first communication station (S1), a first secret key (*K*₁) and exchanging, via a quantum channel (CQ_{A3}) connecting the first satellite (STA) to a third so-called common communication station (S3), a second secret key (*K*₂)
B. exchanging, via a quantum channel (CQ_{B3}) connecting a second satellite (STB) to the common station (S3), a third secret key (*K*₃) and exchanging, via a quantum channel (CQ_{B2}) connecting the second satellite (STB) to the second communication station (S2), a fourth secret key (*K*₄)
C. receiving, in the first and the second satellites (STA, STB), a communication request between the first and the second communication station,
D. encrypting, in the first satellite, the first secret key (*K*₁) by a symmetrical encryption method which uses the second secret key (*K*₂), so as to generate a first encrypted message (*KC*₁₂) and transmitting the first encrypted message to the common station (S3) by a first authenticated channel (*CA*₁)
E. encrypting, in the second satellite, the fourth secret key (*K*₄) by a symmetrical encryption method which uses the third secret key (*K*₃), so as to generate a second encrypted message (*KC*₄₃) and transmitting the second encrypted message to the common station (S3) by a second authenticated channel (*CA*₂)
F. in the common station (S3), decrypting, the first encrypted message (*KC*₁₂) using the second secret key (*K*₂), so as to obtain the first secret key (*K*₁), and decrypting the second encrypted message *(KC*₄₃) using the third secret key (*K*₃), so as to obtain the fourth secret key (*K*₄)
G. encrypting, in the common station (S3), the first secret key (*K*₁) by a symmetrical encryption method which uses the fourth secret key (*K*₄)*,* so as to generate a third encrypted message (*KC*₁₄) and transmitting the third encrypted message to the second communication station (S2) by a third authenticated channel (*CA*₃)

2. Method according to the preceding claim, comprising a subsequent step H consisting of decrypting, in the second communication station, the third encrypted message (*KC*₁₄) using the fourth secret key (*K*₄)*,* so as to obtain the first secret key (*K*₁), the first secret key forming the secure secret key.

3. Method according to the preceding claim, said symmetrical encryption method is the disposable mask method, and wherein the secret keys (*K*₁*, K*₂*, K*₃*, K*₄)*,* and the encrypted messages (*KC*₁₂*_{,}, KC*₄₃*, KC*₄₁) are coded in binary, the encryption steps each being carried out by the logic gate XOR combining the secret keys respectively involved in said encryption step, the decryption steps each being carried out by the logic gate XOR combining the encrypted message with the encrypted secret key which are respectively involved in said encryption step.

4. Method according to any one of claims 2 to 3, comprising two subsequent steps I and J which consist of:
I. encrypting, in the first communication station, a non-random message (M) using the first secret key, then transmitting the encrypted non-random message (MC) to the second communication station, by a so-called clear channel,
J. decrypting, in the second communication station, said non-random message encrypted using the first secret key.

5. Method according to any one of claims 2 to 4, wherein steps A to H are repeated a plurality of times, in order to form a plurality of secure secret keys.

6. Method according to any one of the preceding claims, wherein, in step A, exchanging the second secret key requires a reconciliation substep carried out via said first authenticated channel and/or,
in step B, exchanging the third secret key requires a reconciliation substep carried out via said second authenticated channel.

7. Method according to any one of claims 2 to 6, wherein steps A to H are repeated a plurality of times with a pair of communication stations different from the first and the second communication station.

8. Communication system comprising a first and a second communication station (51, S2), a third communication station called common station (S3) and a first and a second satellite (STA, STB), said first satellite (STA) being adapted to exchange, via a quantum channel (CQ_{A1}) connecting the first satellite (STA) to the first communication station (S1), a first secret key (*K*₁) and to exchange, via a quantum channel (CQ_{A3}) connecting the first satellite (STA) to the common station (S3), a second secret key (*K*₂)
said second satellite (STB) being adapted to exchange, via a quantum channel (CQ_{B3}) connecting the second satellite (STB) to the common station (S3), a third secret key (*K*₄) and to exchange, via a quantum channel (CQ_{B2}) connecting the second satellite (STB) to the second communication station, a fourth secret key (*K*₄)
the first satellite further being adapted to receive a communication request between the first and the second communication station transmitted via a clear request channel (CR), and after which, encrypting the first secret key (*K*₁) by a symmetrical encryption method which uses the second secret key (*K*₂), so as to generate a first encrypted message (*KC*₁₂) and transmitting the first encrypted message to the common station (S3) by a first authenticated channel (*CA*₁)*,*
the second satellite further being adapted to receive said communication request, and after which, encrypting the fourth secret key (*K*₄) by a symmetrical encryption method which uses the third secret key (*K*₃), so as to generate a second encrypted message (*KC*₄₃) and transmitting the second encrypted message to the common station (S3) by a second authenticated channel (*CA₂*)*,*
the common station being adapted to:
- decrypt the first encrypted message (*KC*₁₂) using the second secret key (*K*₂), so as to obtain the first secret key (*K*₁), and decrypt, in the common station (S3), the second encrypted message (*KC*₄₃) using the third secret key (*K*₃), so as to obtain the fourth secret key (K₄)
- encrypt the first secret key (K₁) by a symmetrical encryption method which uses the fourth secret key (K₄)*,* so as to generate a third encrypted message (KC₁₄) and transmit the third encrypted message to the second communication station (S2) by a third authenticated channel (*CA*₃)

9. System according to the preceding claim, wherein the second communication station is adapted to decrypt the third encrypted message (*KC*₁₄) using the fourth secret key (*K*₄)*,* so as to obtain the first secret key (*K*₁), the first secret key forming the secure secret key.

10. System according to claim 8 or 9, wherein the first authenticated channel and/or the second authenticated channel are each a two-directional remote measurement/remote control connection of the first satellite and of the second satellite respectively.

11. System according to any one of claims 8 to 10, wherein the first authenticated channel is relayed by an additional satellite (SR) via an optical or RF (LI) inter-satellite connection connecting the additional satellite and the first satellite and/or the second authenticated channel is relayed by an additional satellite (SR) via an optical or RF (LI) inter-satellite connection connecting the additional satellite and the second satellite.

12. System according to any one of claims 8 to 9 or 11, wherein the first authenticated channel and the second authenticated channel are each an RF or optical anchoring link of a telecommunication service carried by the first satellite and the second satellite respectively.

13. System according to any one of claims 8 to 11, the first authenticated satellite is different from the quantum channel connecting the first satellite to said common station (S3) and the second authenticated channel is different from the quantum channel connecting the second satellite to said common station (S3).

14. System according to any one of claims 8 to 12, wherein the clear request channel is relayed by a local station (SL) capable of communicating with the first and the second satellite via an authenticated local connection (LL).

15. Communication station called common station (S3), said station being adapted to:
- receive a second secret key (*K*₂) exchanged via a quantum channel (CQ_{A3}) connecting a first satellite (STA) and the common station (S3),
- receive a third secret key (*K*₃) exchanged via a quantum channel (CQ_{B3}) connecting a second satellite (STB) to the common station (S3)
- receive, by a first authenticated channel, a first encrypted message (*KC*₁₂) transmitted by the first satellite and generated by a symmetrical encryption method which encrypts, with the second secret key, a first secret key exchanged via a quantum channel (CQ_{A1}) connecting the first satellite (STA) to a first communication station (S1), and
- receive, by a second authenticated channel, a second encrypted message (*KC*₄₃) transmitted by the second satellite and generated by a symmetrical encryption method which encrypts, with the third secret key, a fourth secret key exchanged via a quantum channel (CQ_{B2}) connecting the second satellite (STB) to a second communication station (S2),
- decrypt the first encrypted message (*KC*₁₂) using the second secret key (*K*₂), so as to obtain the first secret key (*K*₁), and decrypt the second encrypted message (*KC*₄₃) using the third secret key (*K*₃), so as to obtain the fourth secret key (*K*₄)
- encrypt the first secret key (*K*₁) by a symmetrical encryption method which uses the fourth secret key (*K*₄)*,* so as to generate a third encrypted message (*KC*₁₄) and transmit the third encrypted message to the second communication station (S2) by a third authenticated channel.
